# EUROPEAN PATENT APPLICATION

(11) **EP 3 960 311 A1**
(43) Date of publication of application: **02.03.2022**
(21) Application number: 20794383.8
(22) Date of filing: 24.04.2020
(51) Int. Cl.: B07B 1/04, B07B 1/52, B07B 1/54

(54) **SIEVE FRAME AND SIEVING DEVICE COMPRISING SAME**

(30) Priority: 24.04.2019 CN 201910332026
(71) Applicant: Buhler (Wuxi) Commercial Co., Ltd., Wuxi, Jiangsu 214142 (CN)
(72) Inventor: GUO, Lei, Wuxi, Jiangsu 214142 (CN)
(74) Representative: Bernhard, Uwe
(86) International application number: PCT/CN2020/086840
(87) International publication number: WO 2020/216351

(57) **Abstract**

A sieve frame (1), including: a sieving component (3) arranged in a horizontal direction; a support component (5) arranged below the sieving component (3), spaced apart from the sieving component (3), and disposed parallel to the sieving component (3), the support component (5) including a plurality of openings (7); a cleaning component (9) arranged between the sieving component (3) and the support component (5), supported by the support component (5), and used to clean the sieving component (3); and a bottom plate (11) arranged below the support component (5), the bottom plate (11) including an inclined surface (13) inclining relative to the horizontal direction and a material discharging port (15) arranged on a side edge of the bottom plate (11), and the inclined surface (13) extending to the material discharging port (5). A sieving device is further included. The sieve frame and the sieving device exhibit high material discharging speed, and the sieve frame provides a high yield. The device has a reduced size and a reduced footprint, thereby saving space.

## Description

### TECHNICAL FIELD

The present invention relates to the industries of milling and particulate or granular grain products, and a screening or sieving apparatus or device, and relates in particular to a sieve frame and a sieving device including the same.

### BACKGROUND

A plansifter, especially a large plansifter or a square plansifter, is a huge square structure having a plurality of large surface elements, and is a special separation apparatus. This apparatus is exclusively used in milling processing for sieving coarsely ground grains, semolina, and powder products, and for sorting various types of grain, such as wheat, rye, corn, barley, etc.

Chinese patent document CN 1079678 A discloses an apparatus for a plansifter. The apparatus includes a plansifter sieve, and the plansifter sieve has a sieve box having a base plate and a fine-product discharge, an insert sieve frame, and a freely movable cleaning member. The sieve frame is provided with a covering on only one side, and preferably has partitioning strips in at least one direction so as to divide the sieve and the base plate into a corresponding number of cleaning zones. In addition, one or more cleaning members placed on the base plate can be inserted into one or more cleaning zones.

With the development of production, requirements on both the yield and the size of screening or sieving devices are becoming higher and higher. The devices need to provide a high yield and have a compact structure and a small footprint. Currently in the industry, most plansifters for flour products no longer meet production requirements, and therefore it is necessary to develop a novel sieve frame.

### SUMMARY

The objective of the present invention is to improve sieve frames in the prior art, and to provide a novel sieve frame and a sieving device comprising the same. The sieve frame exhibits high material discharging speed and provides a high yield. In addition, the sieving device has a reduced size and a reduced footprint, thereby saving space.

The present invention provides a sieve frame. The sieve frame comprises: a sieving component arranged in a horizontal direction; a support component arranged below the sieving component, spaced apart from the sieving component, and disposed parallel to the sieving component, the support component comprising a plurality of openings; a cleaning component arranged between the sieving component and the support component, supported by the support component, and used to clean the sieving component; and a bottom plate arranged below the support component, the bottom plate comprising an inclined surface inclining relative to the horizontal direction and a material discharging port arranged on a side edge of the bottom plate, and the inclined surface extending to the material discharging port.

In some alternative forms, the bottom plate comprises two material discharging ports and two inclined surfaces. Each inclined surface inclines towards one side from a middle position on the bottom plate, and extends to a corresponding material discharging port.

In some alternative forms, the cleaning component comprises a plurality of protrusions, and the protrusions are in contact with the sieving component so as to clean the sieving component.

In some alternative forms, the cleaning component comprises a plurality of arm portions, and each arm portion is provided with one of the protrusions.

In some alternative forms, the cleaning component comprises three arm portions. Respective ends of the three arm portions are connected to each other, and respective other ends of the three arm portions are provided with the protrusions.

In some alternative forms, the sieving component comprises a screening frame and a screening mesh arranged on the screening frame.

In some alternative forms, the screening frame comprises a plurality of screening frame units, and the plurality of screening frame units divide the screening mesh into a plurality of screening mesh units.

In some alternative forms, the sieve frame comprises a plurality of cleaning components, and each cleaning component is arranged below a corresponding screening mesh unit of the sieving component.

In some alternative forms, the openings of the support component are slotted holes.

The present invention further provides a sieving device, and the sieving device comprises the aforementioned sieve frame.

The sieve frame and the screening device comprising the same according to the present invention mainly comprise the following advantages:
1. The present invention improves on the structure of sieve frames, thereby improving the material discharging speed, and improving the yield of a single sieve frame.
2. While meeting the same yield requirements, the sieving device has a reduced size and a reduced footprint, thereby saving space.

The aforementioned advantages and other advantages and features will become clear and understandable by reference to the following detailed description of preferred embodiments provided with reference to the accompanying drawings.

### BRIEF DESCRIPTION OF THE DRAWINGS

For a more complete understanding of the present invention, reference should now be made to the embodiments illustrated in greater detail in the accompanying drawings and described below by way of examples of the present invention, where:
FIG. 1 is a schematic perspective structural view of a sieve frame according to an embodiment of the present invention;
FIG. 2 is a schematic exploded structural view of a sieve frame according to an embodiment of the present invention;
FIG. 3 is a schematic top view of a sieve frame according to an embodiment of the present invention; and
FIG. 4 is a schematic cross-sectional view taken along line A-A in FIG. 3.

### DETAILED DESCRIPTION

As will be understood by those of ordinary skill in the art, various features of embodiments illustrated and described with reference to any one of the accompanying drawings may be combined with features illustrated in one or more of other accompanying drawings to produce other embodiments not explicitly illustrated or described. Combinations of features illustrated provide representative embodiments for typical applications. However, various combinations and modifications of the features consistent with the teachings of the present disclosure may be expected for particular applications or implementations.

In this specification, terms indicating directions such as "upper," "lower," "left," "right," etc. are only for ease of description but not for limitation.

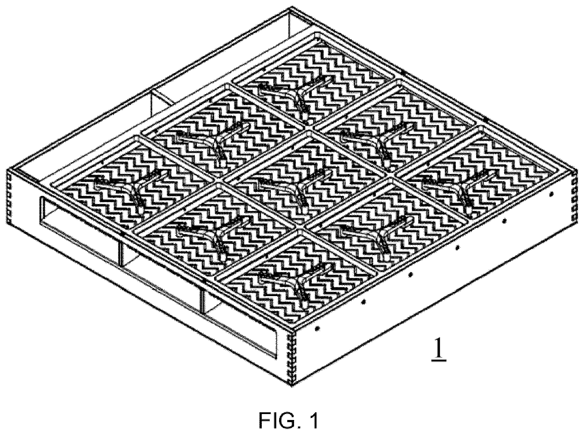

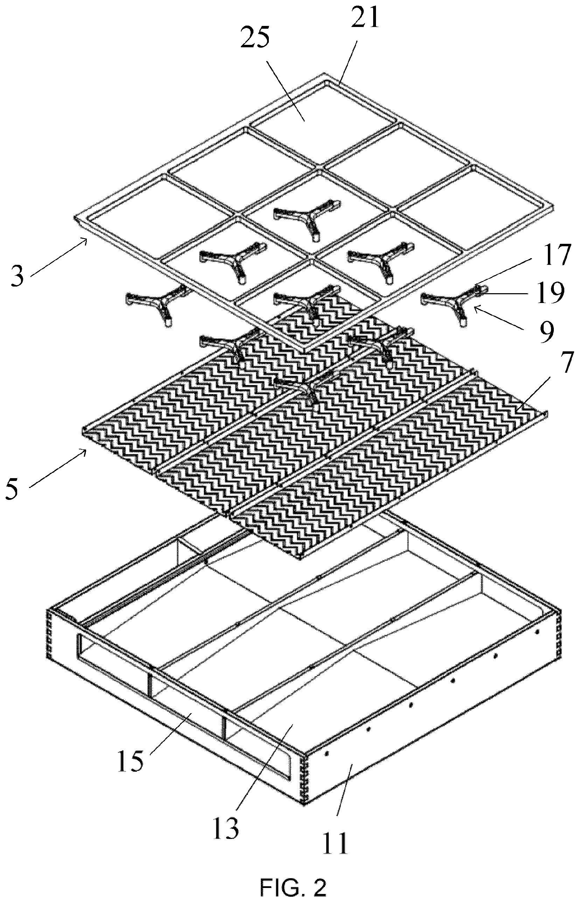

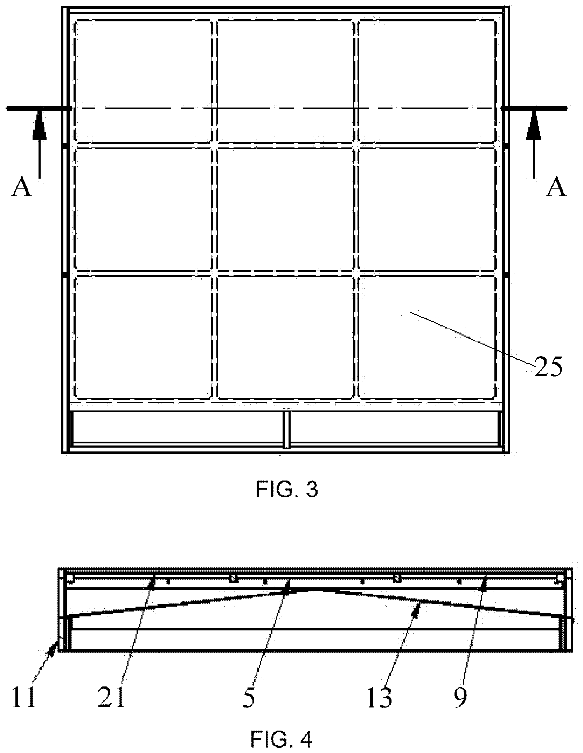

FIG. 1 is a schematic perspective structural view of a sieve frame according to an embodiment of the present invention. FIG. 2 is a schematic exploded structural view of a sieve frame according to an embodiment of the present invention. FIG. 3 is a schematic top view of a sieve frame according to an embodiment of the present invention. FIG. 4 is a schematic cross-sectional view taken along line A-A in FIG. 3. As illustrated in FIG. 1 to FIG. 4, in the embodiments illustrated thereby, a sieve frame 1 mainly includes a sieving component 3, a support component 5, a cleaning component 9, and a bottom plate 11. The sieving component 3 is arranged in a horizontal direction. The support component 5 is arranged below the sieving component 3. The support component 5 is spaced apart from the sieving component 3, and is parallel to the sieving component 3. The support component 5 includes a plurality of openings 7. The cleaning component 9 is arranged between the sieving component 3 and the support component 5, and is supported by the support component 5. The cleaning component 9 is used to clean the sieving component 3. The bottom plate 11 is arranged below the support component 5, and the bottom plate 11 includes an inclined surface 13 inclining relative to the horizontal direction, and a material discharging port 15 arranged on a side edge of the bottom plate 11. The inclined surface 13 extends to the material discharging port 15.

In the present invention, the sieve frame has a relatively large material discharging port; the support device has a relatively large percentage of openings; the bottom plate is designed to include a slope. Therefore, the sieve frame of the present invention exhibits relatively high material discharging speed, and the yield of a single sieve frame is relatively high.

In order to improve the support strength and meet higher food hygiene requirements, the support component can be made of stainless steel.

As illustrated in FIG. 1 to FIG. 4, in the embodiments illustrated thereby, the bottom plate 11 includes two material discharging ports 15 and two inclined surfaces 13. Each inclined surface 13 inclines towards one side from a middle position on the bottom plate 11, and extends to a corresponding material discharging port 15. Therefore, powder can drop on the two inclined surfaces, and can be quickly discharged from the two opposite material discharging ports and enter a sieving channel.

It should be understood that the bottom plate may also include one material discharging port or more than two material discharging ports according to requirements. Correspondingly, the bottom plate may also include one inclined surface or more than two inclined surfaces. Certainly, the number of material discharging ports included in the bottom plate may be different from the number of inclined surfaces included in the bottom plate. For example, two inclined surfaces may correspond to one material discharging port.

As illustrated in FIG. 1 and FIG. 2, in the embodiments illustrated thereby, the cleaning component 9 includes a plurality of protrusions 17. The protrusions 17 are in contact with the sieving component 3 so as to clean the sieving component 3. For example, the protrusions may collide with the sieving component so as to perform cleaning.

It should be understood that the cleaning component may also clean the sieving component by other means. For example, the cleaning component may include a plurality of bristles, and the sieving component is cleaned by means of the bristles. Alternatively, the cleaning component may include a cleaning ribbed plate, and the sieving component is cleaned by means of the cleaning ribbed plate.

As illustrated in FIG. 1 and FIG. 2, in the embodiments illustrated thereby, the cleaning component 9 includes a plurality of arm portions 19, and each arm portion 19 is provided with one of the protrusions 17. Specifically, the cleaning component 9 includes three arm portions 19. Respective ends of the three arm portions 19 are connected to each other, and respective other ends of the three arm portions 19 are provided with the protrusions 17. The three arm portions 19 may be arranged such that included angles of 120°, for example, are formed therebetween. It should be understood that the cleaning component may also be provided with more arm portions, but in terms of cleaning performance, it is better to provide three arm portions.

As illustrated in FIG. 1 and FIG. 2, in the embodiments illustrated thereby, the sieving component 3 includes a screening frame 21 and a screening mesh arranged on the screening frame 21. The screening frame can support and fix the screening mesh. A method for fixing the screening mesh to the screening frame is conventional, and is therefore not redundantly described here.

As illustrated in FIG. 1 to FIG. 4, in the embodiments illustrated thereby, the screening frame 21 includes a plurality of screening frame units 25, and the plurality of screening frame units 25 divide the screening mesh into a plurality of screening mesh units. If the size of the screening mesh is relatively large, the screening frame including the plurality of screening frame units can better support the screening mesh.

As illustrated in FIG. 1 and FIG. 2, in the embodiments illustrated thereby, the sieve frame 1 includes a plurality of cleaning components 9, and each cleaning component 9 is arranged below a corresponding screening mesh unit of the sieving component 3. Specifically, as illustrated in FIG. 1 and FIG. 2, in the embodiments illustrated thereby, the sieve frame includes nine cleaning components, the screening frame includes nine screening frame units, the nine screening frame units divide the screening mesh into nine screening mesh units, and each of the nine cleaning components 9 is arranged below a corresponding screening mesh unit of the sieving component 3. Such arrangement allows the cleaning component to clean the entire screening mesh more effectively.

As illustrated in FIG. 1 to FIG. 4, in the embodiments illustrated thereby, the openings 7 of the support component 9 are slotted holes. The slotted holes allow powder to pass through the support component quickly. It should be understood that the openings may also be in other forms such as a round hole.

According to another embodiment of the present invention, a sieving device is further provided, and the sieving device includes the aforementioned sieve frame.

The following describes the operational procedure of the sieve frame according to the embodiments of the present invention: when the sieving device operates at a certain speed, powder passes through the sieving component and the support component, and at the same time the cleaning component between the sieving component and the support component constantly cleans the sieving component, such that the powder drops onto the inclined surface of the bottom plate, and is quickly discharged by means of the large material discharging port and enters a sieving slot, thereby greatly improving productivity.

The sieving apparatus according to the present invention can be used to sieve coarsely ground grains, semolina, and powder products, and can be used to sort various types of grain, such as wheat, rye, corn, barley, etc.

In summary, the sieve frame and the sieving device including the same provided by the present invention mainly include the following advantages: the present invention improves on the structure of sieve frames, thereby improving the material discharging speed, and improving the yield of a single sieve frame. In addition, while meeting the same yield requirements, the sieving device has a reduced size and a reduced footprint, thereby saving space.

A person skilled in the art will readily learn from such discussion and from the accompanying drawings and claims that various changes, modifications, and variations can be made therein without departing from the true spirit and the reasonable scope of the present invention defined by the following claims.

## Claims

1. A sieve frame (1), **characterized in that** the sieve frame (1) comprises:
a sieving component (3) arranged in a horizontal direction;
a support component (5) arranged below the sieving component (3), spaced apart from the sieving component (3), and disposed parallel to the sieving component (3), the support component (5) comprising a plurality of openings (7);
a cleaning component (9) arranged between the sieving component (3) and the support component (5), supported by the support component (5), and used to clean the sieving component (3); and
a bottom plate (11) arranged below the support component (5), the bottom plate (11) comprising an inclined surface (13) inclining relative to the horizontal direction and a material discharging port (15) arranged on a side edge of the bottom plate (11), and the inclined surface (13) extending to the material discharging port (15).

2. The sieve frame according to claim 1, wherein the bottom plate (11) comprises two material discharging ports (15) and two inclined surfaces (13), and each inclined surface (13) inclines towards one side from a middle position on the bottom plate (11), and extends to a corresponding material discharging port (15).

3. The sieve frame according to claim 1, wherein the cleaning component (9) comprises a plurality of protrusions (17), and the protrusions (17) are in contact with the sieving component (3) so as to clean the sieving component (3).

4. The sieve frame according to claim 3, wherein the cleaning component (9) comprises a plurality of arm portions (19), and each arm portion (19) is provided with one of the protrusions (17).

5. The sieve frame according to claim 4, wherein the cleaning component (9) comprises three arm portions (19), respective ends of the three arm portions (19) are connected to each other, and respective other ends of the three arm portions (19) are provided with the protrusions (17).

6. The sieve frame according to claim 1, wherein the sieving component (3) comprises a screening frame (21) and a screening mesh arranged on the screening frame (21).

7. The sieve frame according to claim 6, wherein the screening frame (21) comprises a plurality of screening frame units (25), and the plurality of screening frame units (25) divide the screening mesh into a plurality of screening mesh units.

8. The sieve frame according to claim 7, wherein the sieve frame (1) comprises a plurality of cleaning components (9), and each cleaning component (9) is arranged below a corresponding screening mesh unit of the sieving component (3).

9. The sieve frame according to claim 1, wherein the openings (7) of the support component (9) are slotted holes.

10. A sieving device, **characterized in that** the sieving device comprises the sieve frame (1) according to any one of claims 1 to 9.
